# DEMANDE DE BREVET EUROPEEN

(11) **EP 4 614 379 A1**
(43) Date de publication de la demande: **10.09.2025**
(21) Numéro de dépôt: 25162215.5
(22) Date de dépôt: 07.03.2025
(51) Int. Cl.: G06F 21/71, G06F 21/57, G06F 21/74

(54) **PROCEDE DE SELECTION DE PROGRAMMES DE DEMARRAGE**

(30) Priorité: 08.03.2024 FR 2402333
(71) Demandeur: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(57) **Abrégé**

La présente description concerne un procédé de sélection d'un programme de démarrage d'un microprocesseur (110) d'un microcontrôleur (100), parmi plusieurs programmes de démarrage (ST_iNoIsolation, STiRoT, RSS) contenus dans une ou plusieurs mémoires (104, 112, 120) du microcontrôleur, dans lequel plusieurs registres (TZEN, PRODUCT_STATE) du microcontrôleur sont lus en premier lors d'une réinitialisation dudit microprocesseur et cette lecture conditionne, avec un état d'au moins un signal présent sur une borne de démarrage (BOOT_PIN) du microcontrôleur, la sélection du programme de démarrage.

## Description

### Domaine technique

La présente description concerne de façon générale les procédés de sélection de programmes de démarrage dans les microprocesseurs de microcontrôleurs, ainsi que les microcontrôleurs mettant en oeuvre de tels procédés.

### Technique antérieure

De nombreux circuits électroniques comme les microcontrôleurs y compris les systèmes sur puce (System On Chip, SOC, en anglais) comprennent une architecture qui permet de choisir le niveau de sécurisation des ressources et des mémoires qui sont utilisées par les applications mises en oeuvre dans ces circuits.

Cependant, certaines architectures ne permettent pas, de base, de choisir entre plusieurs niveaux de sécurisation.

### Résumé de l'invention

Il existe un besoin de fournir des procédés pour permettre de choisir d'implémenter plusieurs niveaux de sécurisation dans un circuit ayant une architecture ne permettant pas, de base, de choisir entre plusieurs niveaux de sécurisation.

Un mode de réalisation pallie tout ou partie des inconvénients des procédés connus.

Un mode de réalisation prévoit un procédé de sélection d'un programme de démarrage d'un microprocesseur d'un microcontrôleur, parmi plusieurs programmes de démarrage contenus dans une ou plusieurs mémoires du microcontrôleur, dans lequel plusieurs registres du microcontrôleur sont lus en premier lors d'une réinitialisation dudit microprocesseur et cette lecture conditionne, avec un état d'au moins un signal présent sur une borne de démarrage du microcontrôleur, la sélection du programme de démarrage.

Selon un mode de réalisation, un premier programme de démarrage d'une mémoire système du microcontrôleur est configuré pour, lorsqu'il est sélectionné, mettre en oeuvre une configuration du microprocesseur pour qu'il soit dans un seul mode de sécurisation.

Selon un mode de réalisation, ledit seul mode de sécurisation est un premier mode de sécurisation où, lorsqu'une transaction non-sécurisée requiert un accès à une ressource sécurisée du microprocesseur, une erreur est renvoyée.

Selon un mode de réalisation, dans le premier mode de sécurisation, lorsqu'une transaction sécurisée requiert un accès à une ressource non-sécurisée du microprocesseur, alors une erreur est renvoyée.

Selon un mode de réalisation, le premier programme de démarrage est configuré pour modifier une valeur d'un registre de sécurisation représentative de la taille d'une région d'accès interdit de la mémoire système contenant le premier programme de démarrage, de sorte qu'au moins ledit premier programme de démarrage ne soit pas accessible.

Selon un mode de réalisation, ladite valeur du registre de sécurisation peut seulement être incrémentée.

Selon un mode de réalisation, la modification de ladite valeur du registre de sécurisation consiste en une augmentation supérieure à un bit.

Selon un mode de réalisation, au moins une application est exécutable depuis une mémoire utilisateur du microcontrôleur, différente de la mémoire système et configurée avec le premier mode de sécurisation, après la sélection du premier programme de démarrage.

Selon un mode de réalisation, la mémoire système est une mémoire à lecture seule ou une mémoire configurée pour fonctionner comme une mémoire à lecture seule.

Selon un mode de réalisation, à l'initialisation du système, si :
- un premier registre d'option a une première valeur ;
- un deuxième registre d'option a une deuxième ou une troisième valeur ; et
- le signal présent sur ladite borne de démarrage est à un premier état ;
alors le premier programme de démarrage est sélectionné dans la mémoire système.

Selon un mode de réalisation, à l'initialisation du système, si :
- le premier registre d'option a la première valeur ;
- le deuxième registre d'option a la deuxième valeur ; et
- le signal présent sur ladite borne de démarrage est à un deuxième état ;
alors un deuxième programme de démarrage est sélectionné dans la mémoire système.

Selon un mode de réalisation, à l'initialisation du système, si :
- le premier registre d'option a la première valeur ; et
- le deuxième registre d'option a une valeur parmi une quatrième, une cinquième et une sixième valeurs ; et
- le signal présent sur ladite borne de démarrage est au premier ou au deuxième état ;
alors le premier programme de démarrage est sélectionné dans la mémoire système.

Selon un mode de réalisation, à l'initialisation du système, si :
- le premier registre d'option a la septième valeur ;
- le deuxième registre d'option a la deuxième valeur ; et
- le signal présent sur ladite borne de démarrage est au premier état ;
alors un troisième programme de démarrage est sélectionné dans une mémoire utilisateur différente de la mémoire système.

Selon un mode de réalisation, à l'initialisation du système, si :
- le premier registre d'option a une septième valeur ;
- le deuxième registre d'option a la deuxième ou la troisième valeur ; et
- le signal présent sur ladite borne de démarrage est à un deuxième état ;
alors un programme de démarrage, différent du premier programme, est sélectionné dans la mémoire système.

Selon un mode de réalisation, un premier et un deuxième registres du microcontrôleur sont lus en premier lors de la réinitialisation dudit microprocesseur et cette lecture conditionne, avec un état dudit au moins un signal présent sur une borne de démarrage du microcontrôleur, la sélection du programme de démarrage ;
une valeur du premier registre définissant si une partition du microprocesseur est mise en œuvre ; et
une valeur du deuxième registre définissant un état de cycle de vie du microcontrôleur.

Un mode de réalisation prévoit un microcontrôleur, comprenant un microprocesseur, une mémoire système et une mémoire utilisateur, et configuré pour mettre en oeuvre le procédé tel que décrit ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de circuit intégré du type auquel s'appliquent les modes de réalisation décrits ;
la figure 2 illustre un mode de mise en œuvre d'un procédé de sélection de programmes de démarrage du circuit de la figure 1 ; et
la figure 3 illustre un autre mode de mise en œuvre d'un procédé de sélection de programmes de démarrage du circuit de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas" , "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

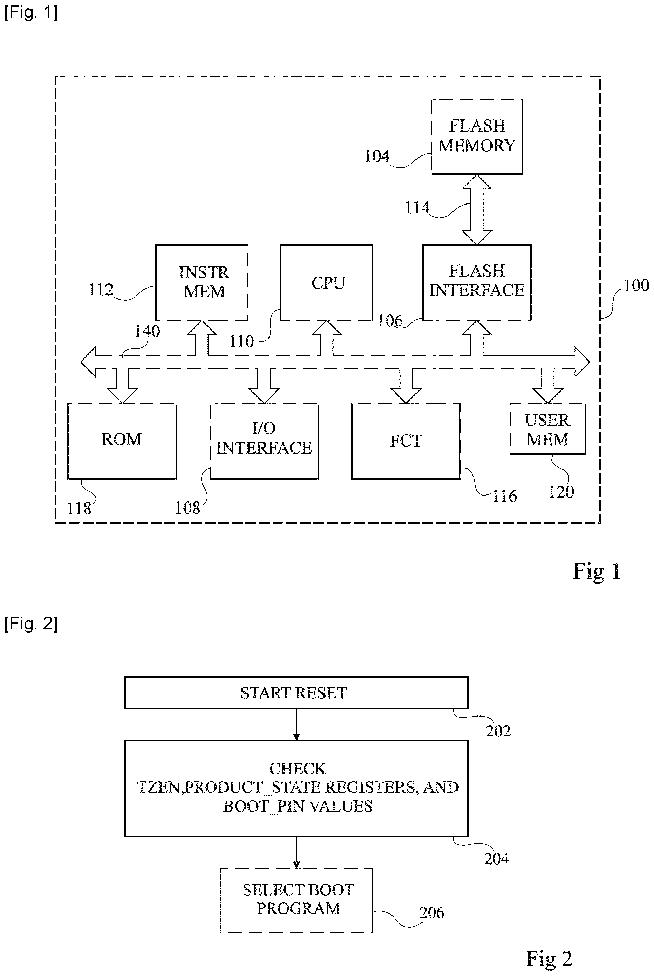

La figure 1 représente, de façon très schématique et sous forme de blocs, un exemple de circuit électronique 100 du type auquel s'appliquent les modes de réalisation décrits.

Le circuit 100 comprend une mémoire non-volatile 104 (FLASH MEMORY), par exemple de type mémoire FLASH, capable de communiquer, via un bus de communication 114, avec une interface de mémoire non-volatile 106 (FLASH INTERFACE) configurée pour écrire ou lire des données dans et depuis la mémoire non-volatile 104. Dans un exemple, des programmes et/ou applications systèmes, tels que des programmes de démarrage, sont mis en oeuvre dans la mémoire 104.

Le circuit 100 comprend en outre, par exemple, une unité de traitement 110 (CPU) comprenant un ou plusieurs processeurs sous contrôle d'instructions stockées dans une mémoire d'instructions système 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire FLASH 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le circuit 100 comprend en outre, par exemple une autre mémoire 120 (USER MEM) de type non volatile ou de type RAM. Cette mémoire 120 est reliée au bus système 140 directement ou par l'intermédiaire d'une interface de mémoire (non illustrée) dont le rôle est par exemple similaire à l'interface 106.

Le dispositif 100 peut intégrer d'autres circuits mettant en œuvre d'autres fonctions (par exemple, une ou plusieurs mémoires volatiles et/ou non-volatiles, d'autres unités de traitement), symbolisées par un bloc 116 (FCT) en figure 1. Parmi ces autres circuits, le circuit 100 comporte par exemple une mémoire morte ou statique 118 (ROM).

Un ou des programmes de démarrage du circuit sont par exemple transférés directement vers la mémoire 104 lors de processus de programmation en usine. Le ou les programmes de démarrage ne doivent pas être modifiés une fois transférés en mémoire flash 104, sauf réinitialisation du circuit 100. Pour ce faire, on prévoit de verrouiller l'accès à la zone de la mémoire flash contenant le programme de démarrage afin qu'il soit impossible d'y accéder hors redémarrage. Cela est fait par exemple en mettant en oeuvre un registre (HDPL), par exemple monotone croissant, dont la valeur est représentative de la taille d'une région d'accès interdit de la mémoire contenant le ou les programmes de démarrage, de sorte que le ou les programmes de démarrage ne soit pas accessibles. Par exemple, lorsque la valeur du registre HDPL est à 1, le programme de démarrage qui se trouve dans une région de la mémoire associée à la valeur 1 peut être exécuté. Après exécution, la valeur HDPL est incrémentée à 2 ce qui interdit l'accès au programme de démarrage situé dans la région de la mémoire associée à la valeur 2. Si un deuxième programme de démarrage a été chargé dans la mémoire dans des secteurs entre HDPL 1 et HDPL2, alors il peut être exécuté puis la valeur HDPL est incrémentée à 3 ce qui interdit l'accès aux deux programmes de démarrage situés dans les régions de la mémoire associées à la valeur 1 et 2. Des applications sont ensuite par exemple mises en œuvre dans la mémoire sans avoir le même niveau de restriction d'accès.

Dans certaines architectures, comme par exemple celles de type ARM^{®} v8.0-M ou ARM^{®} CORTEX^{®} M33, en sélectionnant une option lors du développement, par exemple en changeant la valeur d'un octet d'option utilisateur (« user option byte » en anglais), les ressources ou mémoires du circuit mais aussi certains programmes peuvent être partitionnés avec différents niveaux de sécurité. Ce mécanisme s'appelle dans ces exemples « Trustzone ». Un premier niveau de sécurité (secure en anglais) est par exemple mis en oeuvre en instaurant que, lorsqu'une transaction non-sécurisée requiert un accès à une ressource sécurisée du microprocesseur, alors une erreur est renvoyée par exemple sur le bus 140 et lorsqu'une transaction sécurisée requiert un accès à une ressource non-sécurisée du microprocesseur, alors une erreur est également renvoyée. Le reste du circuit et/ou des programmes est alors par exemple mis en oeuvre avec des principes de sécurité moins strictes où par exemple les programmes ayant un niveau de sécurité inférieur au premier niveau peuvent accéder uniquement aux ressources et mémoires non-sécurisées du circuit 100.

Dans certaines architectures, comme par exemple celles de type ARM^{®} CORTEX^{®} M85 ou ARMV8.1-M, il n'y a pas d'options pour choisir de partitionner ou non les ressources, mémoires et programmes du circuit avec différents niveaux de sécurité. Dans ces architectures, seul le niveau de sécurité élevé est rendu disponible. En d'autres termes, dans ces architectures, le mécanisme « Trustzone » n'est pas nativement désactivable. Il y a donc de base une isolation (appelée par exemple TZIsolation) entre des ressources, mémoires ou programmes ayant le premier niveau de sécurité et un mode moins sécurisé. Cela peut poser des problématiques pour permettre de développer facilement des applications qui ne nécessitent pas de mettre en oeuvre une isolation de sécurité, comme par exemple le mécanisme « Trustzone », ou qui n'ont même simplement pas besoin d'être sécurisées.

Les modes de réalisation décrits prévoient de mettre en oeuvre un procédé de sélection d'un programme de démarrage d'un microprocesseur d'un microcontrôleur, parmi plusieurs programmes de démarrage contenus dans une ou plusieurs mémoires du microcontrôleur, dans lequel plusieurs registres du microcontrôleur sont lus en premier lors d'une réinitialisation dudit microprocesseur et cette lecture conditionne, avec un état d'au moins un signal présent sur une borne de démarrage du microcontrôleur, la sélection du programme de démarrage.

Cela permet de s'affranchir par exemple de la mise en oeuvre systématique d'un système de partition des ressources, mémoires ou programme entre plusieurs niveaux de sécurité. Il est ainsi possible d'obtenir un seul niveau de sécurité ou de générer un seul et même niveau de sécurité pour l'ensemble des ressources, mémoires et programmes utilisés.

Cela permet en outre d'obtenir une solution logicielle permettant de faciliter le développement d'applications qui n'ont pas besoin d'un niveau de sécurité élevé. Un tel mode est par exemple connu sous le nom « legacy ».

Cela permet en outre qu'un programme de démarrage, permettant de s'affranchir de la mise en oeuvre systématique d'un système de partition des ressources, puisse être intégré comme un code natif, par le fabricant, directement dans une mémoire système qui contient tous les programmes du fabricant. Un avantage en découlant est qu'une mémoire utilisateur, différente de la mémoire système, pourra être ainsi complètement libérée.

De plus, cela assure la portabilité de programmes développés auparavant sur des architectures qui permettaient encore de choisir, par le biais du changement d'octets d'option utilisateur, l'activation d'une partition des ressources, mémoires ou programme entre plusieurs niveaux de sécurité.

La figure 2 illustre un mode de mise en œuvre d'un procédé de sélection de programmes de démarrage du microcontrôleur de la figure 1. Plus particulièrement, l'exemple représenté illustre un procédé de sélection de programmes de démarrage de l'unité de traitement 110, autrement dit d'un microprocesseur, du microcontrôleur 100. Ces programmes de démarrage sont présents soit dans une mémoire utilisateur, par exemple la mémoire 120, soit dans une mémoire dite système telle que la mémoire 104 ou 112.

Dans une étape 202 (START RESET), le microprocesseur 110 est réinitialisé, par exemple avec une interruption de l'alimentation électrique ou par la mise en oeuvre de commandes spécifiques.

Dans une étape ultérieure 204 (CHECK TZEN, PRODUCT_STATE REGISTERS, AND BOOT_PIN VALUES), plusieurs registres TZEN, PRODUCT_STATE du microcontrôleur 100, ainsi qu'un état d'au moins un signal présent sur une borne de démarrage (BOOT_PIN) du microcontrôleur 100, sont lus en premier. Les valeurs des registres TZEN ou PRODUCT_STATE sont appelés des octets d'options d'utilisateurs.

Le registre TZEN correspond par exemple à un registre présent dans d'anciennes architectures, par exemple de type ARM^{®} v8.0-M ou ARM^{®} CORTEX^{®} M33. Dans ces anciennes architectures, ils permettaient de choisir de mettre en oeuvre un partitionnement des ressources du microprocesseur, par exemple si TZEN=1, ou au contraire de ne pas mettre en oeuvre de partitionnement, par exemple dans le cas où TZEN=0. Dans les nouvelles architectures, nativement, un tel registre n'est plus pris en compte et un partitionnement est de base mis en oeuvre. Ici, la valeur de ce registre est lue, même si elle ne permet pas, en tant que telle, de désactiver le partitionnement de base du microprocesseur 110.

La valeur du registre PRODUCT_STATE correspond à un état du cycle de vie du microcontrôleur 100. Le registre PRODUCT_STATE peut comporter plusieurs valeurs. Au moment de la fabrication, l'état est inscrit comme « OPEN **»,** puis « PROVISIONING **»,** puis « PROVISIONED **»,** puis « TZ-CLOSED » puis « CLOSED » ou « LOCKED **».** Ces différents états du registre PRODUCT_STATE peuvent être utilisés pour permettre à différents sous-traitant d'intervenir lors de la fabrication du microcontrôleur 100.

L'état « OPEN » correspond à l'état par défaut en usine du microcontrôleur. Il permet la configuration du programme de démarrage, la mise en place d'une protection avec un registre de sécurisation (HDPL) dont la valeur est représentative de la taille d'une région d'accès interdit de la mémoire système. Dans cet état, le débogage est ouvert sans limites.

L'état « PROVIONING » correspond à un état du microcontrôleur dans lequel le débogage n'est ouvert que pour les applications dont la valeur du registre de sécurisation (HDPL) est supérieure à un nombre donné, par exemple 3. Dans cet état, un encryptage est réalisé sur les zones de données comprenant des clés de sécurité.

L'état « PROVISIONED » autrement appelé « iROT-PROVISIONED » correspond à un état ultérieur à l'état « PROVIONING **».** Dans cet état, certains programmes utilisés au démarrage ainsi que des données ne sont plus accessibles. A partir de cet état, les niveaux supérieurs peuvent être mis à jour.

L'état « TZ-CLOSED » correspond à un état où les programmes qui utilisent les ressources dédiées au mode de sécurisation « secure » de l'architecture « Trustzone » ont été installés. Dans cet état, les applications dédiées à l'autre mode de sécurisation « non-secure » peuvent être développée ou chargées.

L'état « CLOSED » puis « LOCKED » correspondent au stade final du produit. Dans l'état « CLOSED **»,** tous les accès de débogage sont fermés et ne peuvent être accessibles que par authentification forte. Avec cette authentification forte, une régression est toutefois possible. Dans l'état « LOCKED » tous les accès de débogage sont fermés y compris avec authentification forte.

L'état du ou des signaux présents sur une ou des bornes de démarrage BOOT_PIN du microcontrôleur 100 correspond par exemple à un état haut (1) ou bas (0). L'utilisateur peut choisir d'appliquer par exemple une tension VDD pour l'état haut ou la masse pour l'état bas sur cette borne.

La lecture des registres TZEN et PRODUCT_STATE, ainsi que la lecture de l'état sur la borne de démarrage BOOT_PIN du microcontrôleur 100, est réalisée en premier après la réinitialisation.

Dans une étape 206 (SELECT BOOT PROGRAM), postérieure à l'étape 204, les valeurs lues des registres TZEN et PRODUCT_STATE, et de l'état sur la borne de démarrage BOOT_PIN du microcontrôleur 100, conditionnent la sélection du programme de démarrage.

L'opération de sélection consiste à mettre en oeuvre le programme de démarrage qui est stocké dans une ou plusieurs zones mémoires délimitées chacune par exemple par deux ou plus adresses mémoires.

La sélection peut se faire dans une mémoire système comme les mémoires 104, 112 pour une application plus sécurisée, mais également depuis une mémoire utilisateur, par exemple la mémoire 120. Dans un exemple, la mémoire système 104, 112 ne peut pas être écrite ou lue par l'utilisateur qui n'a lui qu'accès à la mémoire utilisateur 120.

Ainsi l'utilisateur, qui est par exemple un sous-traitant ou un utilisateur professionnel intégrant le microcontrôleur dans ses produits, peut mettre en oeuvre son application dans le niveau de sécurisation voulu, pendant une phase de personnalisation du microcontrôleur, à partir de la mémoire utilisateur 120.

Le tableau Table 1 ci-dessous correspond par exemple à une banque de donnée qui sert de référence pour la sélection du programme de démarrage (BOOT_SELEC), ou de manière équivalente de la zone de mémoire correspondante à ce programme, en fonction des valeurs lues des registres TZEN et PRODUCT_STATE, et de l'état sur la borne de démarrage BOOT_PIN, mais également facultativement d'un registre appelé BOOT_UBE.

**[Table 1]**

| TZEN | PRODUCT_STATE | **BOOT_PIN** | **BOOT_UBE** | **BOOT_SELEC** |
|---|---|---|---|---|
| 0 | OPEN | 0 | N/A | ST-iNoIsolation |
| 0 | | 1 | N/A | Bootloader |
| 0 | PROVISIONING | N/A | N/A | ST-iNoIsolation |
| 0 | PROVISIONED, CLOSED, LOCKED | N/A | N/A | ST-iNoIsolation |
| 1 | OPEN | 0 | N/A | User mem |
| 1 | OPEN | 1 | 0xB4 | Bootloader |
| 1 | OPEN | 1 | 0xC3 | STiROT |
| 1 | PROVISIONING | N/A | N/A | RSS |
| 1 | PROVISIONED, TZ-CLOSED, CLOSED, LOCKED | N/A | 0xC3 | STiROT |
| 1 | | N/A | 0xB4 | User mem |

Dans le tableau TABLE 1, la valeur N/A signifie que le résultat de la sélection ne dépend pas de la valeur dans la case correspondante ayant N/A.

Les programmes ST-iNoIsolation, Bootloader, STiROT, et RSS sont par exemple stockés dans différentes zones de mémoire système 104, 112. Ces programmes sont par exemple protégés par des valeurs monotones croissantes du registre de sécurisation HDPL.

Au vu du tableau Table 1, il est possible qu'un programme de démarrage soit sélectionné dans une mémoire utilisateur 120 (User mem), par exemple lorsque TZEN=1, PRODUCT_STATE=0 et l'état BOOT_PIN=0.

Au vu du tableau Table 1, lorsque le registre d'option TZEN a une valeur 0, lorsque le registre PRODUCT_STATE a la valeur OPEN ou PROVISIONING et le signal présent sur la borne de démarrage BOOT_PIN est à 0, alors la zone d'adresse ST_iNoIsolation, ou de manière équivalente le programme de démarrage ST_iNoIsolation présent dans cette zone d'adresse, est sélectionné dans la mémoire système.

Lorsque le registre d'option TZEN a une valeur 0, et que le registre PRODUCT_STATE a la valeur PROVISIONING, alors le programme de démarrage ST_iNoIsolation est sélectionné dans la mémoire système quelque soit l'état sur la borne BOOT_PIN.

Il en est de même lorsque TZEN a la valeur 0, et que le deuxième registre d'option PRODUCT_STATE a une valeur parmi les valeurs PROVISIONED, CLOSED ou LOCKED ; et ce, quelque soit l'état du signal présent sur la borne de démarrage BOOT_PIN.

Le programme de démarrage ST_iNoIsolation est configuré pour, lorsqu'il est sélectionné, configurer le microprocesseur 110 pour qu'il soit dans un seul mode de sécurisation secure ou non-secure selon la valeur de TZEN. En sélectionnant le programme de démarrage ST_iNoIsolation stocké dans la mémoire système 104, 112, il devient possible d'initialiser des applications dans la mémoire utilisateur 120 avec le même mode de sécurisation. Le programme de démarrage ST_iNoIsolation est en outre configuré pour initialiser la mémoire entière vue par l'application (mémoires non volatiles et volatiles) dans le même mode de sécurisation, par exemple secure. En d'autres termes, le programme ST-iNoIsolation émule le mode de sécurisation choisi. Les applications mises en oeuvre, par exemple par un client ou un sous-traitant, dans la mémoire utilisateur 120, le seront dans le mode de sécurisation choisi avec TZEN.

De façon facultative, le programme ST_iNoIsolation est configuré pour changer la valeur HDPL de HDPL1 à HDPL3 pour empêcher d'implémenter des fonctions du ou des programmes de démarrage sécurisés dans la mémoire système 104, 112 une fois exécutés.

Facultativement, le programme ST_iNoIsolation est configuré pour permettre le débogage pour les zones mémoires de valeur HDPL3 seulement. De plus il peut être configuré pour mettre en oeuvre une méthode d'authentification pour accéder au débogage qui soit un niveau de mot de passe et non un certificat.

Après que le programme ST_iNoIsolation ait été sélectionné, le microprocesseur 110 met en oeuvre une application, dans la mémoire utilisateur 120, avec le mode de sécurisation prévu par le registre TZEN.

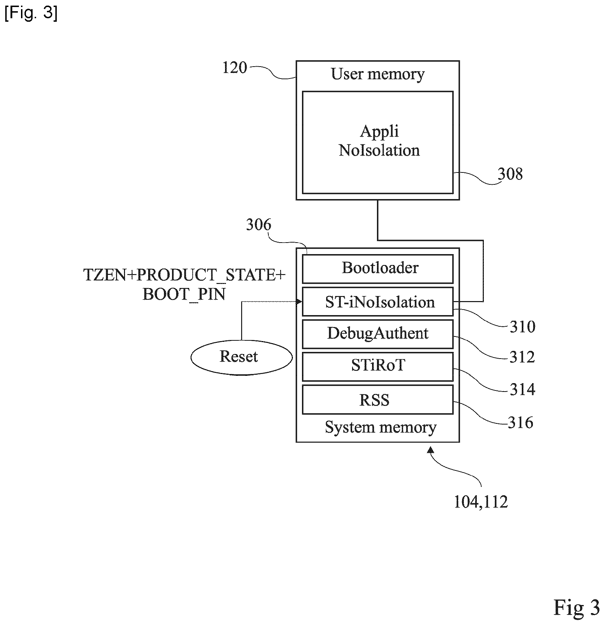

La figure 3 illustre un autre mode de mise en œuvre d'un procédé de sélection de programmes de démarrage du circuit de la figure 1. Plus particulièrement, l'exemple illustré décrit la mémoire utilisateur 120, et la mémoire système 104, 112.

Dans l'exemple représenté, la mémoire système 104, 112 est par exemple configurée pour émuler un mémoire de type à lecture seule (ROM, Read Only Memory en anglais).

Dans l'exemple représenté, la mémoire système 104, 112 comprend des programmes 316 (RSS), 314 (STiROT) qui sont par exemple des programmes de démarrage successifs préalablement chargés et par exemple protégés par des zones utilisant des valeurs HDPL croissantes.

Dans la figure 3, la mémoire système 104, 112 comprend en outre le programme 312 (DebugAuthent) qui est placé par exemple entre une adresse mémoire dédiée au programme 314 (STiROT) et une adresse mémoire dédiée au programme 310 (ST-iNoIsolation). Le programme 312 est par exemple appelé lorsqu'une authentification pour le débogage est prévue. La mémoire système 104, 112 comprend également le programme 306 (Bootloader) placé après une adresse mémoire de fin du programme 310 (ST-iNoIsolation). Dans un exemple, cette zone mémoire où est stocké le programme de démarrage ST-iNoIsolation ne peut être modifiée une fois chargée (immutable en anglais).

Lors d'une réinitialisation (Reset) du microprocesseur 110, les registres TZEN et PRODUCT_STATE sont lus ainsi que l'état du signal sur la borne BOOT_PIN. Si ces valeurs correspondent, en utilisant le tableau TABLE 1, au programme ST-iNoIsolation -ou de manière équivalente à la zone mémoire correspondant au programme ST-iNoIsolation-alors le microprocesseur va démarrer par l'exécution du programme ST-iNoIsolation qui va configurer le microprocesseur, et éventuellement l'ensemble du microcontrôleur 100, pour qu'il soit dans un seul mode de sécurisation secure ou non-secure tel que défini par la valeur du registre TZEN. Le microprocesseur 110 exécutera ensuite l'application 308 (Appli NoIsolation), depuis la mémoire utilisateur 120 (User memory). L'ensemble de la mémoire 120 est ainsi disponible pour l'utilisateur, qui est par exemple un sous-traitant.

Le fait que le microprocesseur 110 n'ait plus lui-même nativement l'entrée pour choisir le mode de sécurisation devient ainsi transparent pour l'utilisateur puisque le choix est réintroduit à travers l'utilisation du registre TZEN associé au programme ST-iNoIsolation.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le choix du programme de démarrage pourra se faire en tenant compte également de la valeur du registre BOOT_UBE comme montré dans le tableau TABLE 1.

Enfin, la mise en oeuvre pratique des modes de réalisation et variantes décrits est à la portée de la personne du métier à partir des indications fonctionnelles données ci-dessus. En particulier, pour ce qui est des valeurs du tableau TABLE 1, la personne du métier pourra modifier à sa guise ces valeurs tout en essayant toutefois de garder une transparence d'utilisation sur le registre TZEN par rapport à des utilisations antérieures.

## Revendications

1. Procédé de sélection d'un programme de démarrage d'un microprocesseur (110) d'un microcontrôleur (100), parmi plusieurs programmes de démarrage (ST_iNoIsolation, STiRoT,RSS) contenus dans une ou plusieurs mémoires (104, 112,120) du microcontrôleur, dans lequel plusieurs registres (TZEN,PRODUCT_STATE) du microcontrôleur sont lus en premier lors d'une réinitialisation dudit microprocesseur et cette lecture conditionne, avec un état d'au moins un signal présent sur une borne de démarrage (BOOT_PIN) du microcontrôleur, la sélection du programme de démarrage.

2. Procédé selon la revendication 1, dans lequel un premier programme de démarrage (ST_iNoIsolation) d'une mémoire système du microcontrôleur est configuré pour, lorsqu'il est sélectionné, mettre en oeuvre une configuration du microprocesseur pour qu'il soit dans un seul mode de sécurisation (secure, non-secure).

3. Procédé selon la revendication 2, dans lequel ledit seul mode de sécurisation est un premier mode de sécurisation (secure) où, lorsqu'une transaction non-sécurisée (non-secure) requiert un accès à une ressource sécurisée du microprocesseur, une erreur est renvoyée.

4. Procédé selon la revendication 3, dans lequel, dans le premier mode de sécurisation, lorsqu'une transaction sécurisée (secure) requiert un accès à une ressource non-sécurisée du microprocesseur, alors une erreur est renvoyée.

5. Procédé selon l'une quelconque des revendications 2 à 4, dans lequel le premier programme de démarrage (ST_iNoIsolation) est configuré pour modifier une valeur d'un registre de sécurisation (HDPL) représentative de la taille d'une région d'accès interdit de la mémoire système (104, 112) contenant le premier programme de démarrage (ST_iNoIsolation), de sorte qu'au moins ledit premier programme de démarrage (ST_iNoIsolation) ne soit pas accessible.

6. Procédé selon la revendication 5, dans lequel ladite valeur du registre de sécurisation (HDPL) peut seulement être incrémentée.

7. Procédé selon la revendication 6, dans lequel la modification de ladite valeur du registre de sécurisation (HDPL) consiste en une augmentation supérieure à un bit (HDPL1 to HDPL3).

8. Procédé selon l'une quelconque des revendications 2 à 7, dans lequel au moins une application (Appli NoIsolation) est exécutable depuis une mémoire utilisateur (120) du microcontrôleur, différente de la mémoire système et configurée avec le premier mode de sécurisation, après la sélection du premier programme de démarrage (ST_iNoIsolation).

9. Procédé selon l'une quelconque des revendications 2 à 8, dans lequel la mémoire système est une mémoire à lecture seule ou une mémoire configurée pour fonctionner comme une mémoire à lecture seule.

10. Procédé selon l'une quelconque des revendications 2 à 9, dans lequel, à l'initialisation du système, si :
- un premier registre d'option (TZEN) a une première valeur (TZEN=0) ;
- un deuxième registre d'option (PRODUCT_STATE) a une deuxième ou une troisième valeur (OPEN, PROVISIONING) ; et
- le signal présent sur ladite borne de démarrage (boot pin) est à un premier état (0) ;
alors le premier programme de démarrage (ST_iNoIsolation) est sélectionné dans la mémoire système (104, 112).

11. Procédé selon la revendication 10, dans lequel, à l'initialisation du système, si :
- le premier registre d'option (TZEN) a la première valeur (TZEN=0) ;
- le deuxième registre d'option (PRODUCT_STATE) a la deuxième valeur (Open) ; et
- le signal présent sur ladite borne de démarrage (boot pin) est à un deuxième état (1) ;
alors un deuxième programme de démarrage (Bootloader) est sélectionné dans la mémoire système.

12. Procédé selon la revendication 10 ou 11, dans lequel, à l'initialisation du système, si :
- le premier registre d'option (TZEN) a la première valeur (TZEN=0) ; et
- le deuxième registre d'option (PRODUCT_STATE) a une valeur parmi une quatrième, une cinquième et une sixième valeurs (PROVISIONED, CLOSED, LOCKED) ; et
- le signal présent sur ladite borne de démarrage (BOOT_PIN) est au premier ou au deuxième état (0, 1) ; alors le premier programme de démarrage (ST_iNoIsolation) est sélectionné dans la mémoire système.

13. Procédé selon l'une quelconque des revendications 10 à 12, dans lequel, à l'initialisation du système, si :
- le premier registre d'option (TZEN) a la septième valeur (TZEN=1) ;
- le deuxième registre d'option (PRODUCT_STATE) a la deuxième valeur (OPEN) ; et
- le signal présent sur ladite borne de démarrage (BOOT_PIN) est au premier état (0) ;
alors un troisième programme de démarrage (User mem) est sélectionné dans une mémoire utilisateur (120) différente de la mémoire système.

14. Procédé selon l'une quelconque des revendications 10 à 13, dans lequel, à l'initialisation du système, si :
- le premier registre d'option (TZEN) a une septième valeur (TZEN=1) ;
- le deuxième registre d'option (PRODUCT_STATE) a la deuxième ou la troisième valeur (OPEN, PROVISIONING) ; et
- le signal présent sur ladite borne de démarrage (BOOT_PIN) est à un deuxième état (1) ;
alors un programme de démarrage (STiROT, Bootloader, RSS), différent du premier programme, est sélectionné dans la mémoire système (104, 112).

15. Procédé selon l'une quelconque des revendications 1 à 14, dans lequel un premier et un deuxième registres (TZEN,PRODUCT_STATE) du microcontrôleur sont lus en premier lors de la réinitialisation dudit microprocesseur et cette lecture conditionne, avec un état dudit au moins un signal présent sur une borne de démarrage (BOOT_PIN) du microcontrôleur, la sélection du programme de démarrage ; une valeur du premier registre (TZEN) définissant si une partition du microprocesseur (110) est mise en œuvre ; et une valeur du deuxième registre (PRODUCT_STATE) définissant un état de cycle de vie du microcontrôleur (100).

16. Microcontrôleur, comprenant un microprocesseur (110), une mémoire système (104, 112) et une mémoire utilisateur (120), et configuré pour mettre en oeuvre le procédé selon l'une quelconque des revendications précédentes.
